(19) **Europäisches Patentamt**
**European Patent Office**
**Office européen des brevets**

(11) **EP 1 972 958 A1**

(12) **EUROPEAN PATENT APPLICATION**

(43) Date of publication:
**24.09.2008 Bulletin 2008/39**

(51) Int Cl.:
***G01S 5/14*** *(2006.01)*

(21) Application number: **07112008.3**

(22) Date of filing: **07.07.2007**

<table>
<tr><td>(84) Designated Contracting States:<br>**AT BE BG CH CY CZ DE DK EE ES FI FR GB GR HU IE IS IT LI LT LU LV MC MT NL PL PT RO SE SI SK TR**<br>Designated Extension States:<br>**AL BA HR MK RS**<br><br>(30) Priority: **22.03.2007 EP 07005971**<br>**04.05.2007 EP 07009090**</td><td>(71) Applicant: **Technische Universität München**<br>**80333 München (DE)**<br><br>(72) Inventor: **Henkel, Patrick**<br>**82275 Emmering (DE)**<br><br>(74) Representative: **Herrmann, Franz**<br>**Dendorfer & Herrmann**<br>**Patentanwälte Partnerschaft**<br>**Bayerstrasse 3**<br>**80335 München (DE)**</td></tr>
</table>

(54) **Method for processing a set of signals of a global navigation satellite system with at least three carriers**

(57)   A method for processing a set of navigation signals (3) of a global navigation satellite system (1) with at least three carrier signals (4) is disclosed in which the processing of the navigation signals (3) is based on a linear combination of the carrier signals (4) to a combined signal. The weighting coefficients are selected in order to minimize the iono-spheric error and the combined noise of the combined signal.

FIG 1

EP 1 972 958 A1

**Description**

The invention relates to a method for processing a set of navigation signals of a global navigation satellite system with at least three carrier signals in which the processing of the navigation signals is based on a linear combination of phase measurements of the carrier signals to a combined phase signal.

Such a method is known from ZHANG, H.: Triple frequency Cascading Ambiguity Resolution for Modernized GPS and Galileo. In: UCGE Reports, No. 20228, 2005. According to the known method three frequency linear combinations for Galileo are proposed. A stringent bound on the weighting coefficients, however, prevented the generation of new widelane combinations above 0.90 m.

Currently three global navigation satellite systems are used or proposed: The global positioning system (GPS), Glonass, and the proposed Galileo system. The global navigation satellite systems are based on navigation satellites which emit carrier signals in the higher frequency range. A periodical code sequence and a navigation message are modulated on the carrier signals. Based on the code sequence and the navigation message a positioning process of a navigation device can be performed. The accuracy of the positioning can be considerably enhanced if the high frequency carrier signal is used for the positioning process besides the code signal. For instance, within GPS, the wavelength of the carrier signal $L_1$ amounts to 19.0 cm compared to 300 m of a code chip. In consequence an accuracy improvement by a factor of 1500 is to be expected, if the high frequency carrier signal is used for the positioning process.

One disadvantage of a positioning process using the carrier signals is the ambiguity of the phase since the carrier signal contains no information on the integer number of wavelengths between the navigation device and the satellite. Therefore, the phasing is unknown.

Furthermore, it has to be taken into account, that the carrier signal pass through the earth's atmosphere particular through the ionosphere. In consequence the carrier signals show a so called ionospheric error. Further error sources are the phase noise of the carrier signal, the orbital error of the satellite as well as the clock error of the navigation device and the satellite.

The clock errors can be eliminated by the double difference method in which the position of the navigation device with respect to a reference station is determined by considering the differences between current difference signals from different satellites, wherein the difference signals are formed by the differences between the signals emitted by a specific satellite but received from the navigation device and the reference station. In addition ionospheric and tropospheric errors are significantly attenuated for short baselines if the double difference method is used.

In general, the phase ambiguity is resolved by estimating the phasing. The reliability of the estimate depends among other things on the relation between the wavelength of the carrier signal and the deviations resulting from the other error sources. Typically, the ionospheric error results in a spatial error of a few meters, whereas the phase noise affects the results of the phase estimation by a few millimeters.

For resolving the phase ambiguity an iterative approach is used, which is called Cascade Integer Resolution (CIR). In the beginning, the phase is estimated using a combined signal with the greatest wavelength. In subsequent iteration steps, further combined signals with stepwise decreasing wavelength are considered. In each iteration step the phasing is estimated wherein the information on the phasing gained in previous iteration steps can be used in subsequent iteration steps.

By combining carrier signals a combined signal can be generated which comprises a significantly greater wavelength than the single carrier signals. For instance, the difference between the carrier signals $L_1$ and $L_2$ results in a combined signal with a wavelength of 86.2 cm, which is therefore referred to as widelane (WL). The sum of the carrier signals $L_1$ and $L_2$ results in a combined signal with a wavelength of 10.7 cm, which is referred to as narrowlane (NL).

Furthermore, there exist also ionosphere-free combinations (IF), which are based on an unequal weighting of the carrier signals $L_1$ and $L_2$. The IF-combination eliminates the double differenced ionospheric error of first order. If the distance between the navigation system and the reference station is large, the elimination of the first order ionospheric error is particularly important since the ionospheric order is insufficiently eliminated by the double difference method.

The proposed use of a third carrier signal $L_5$ allows further elementary combinations: the difference between the carrier signal $L_1$ and $L_5$ has a wavelength of 75.1 cm and the difference between the carrier signals $L_2$ and $L_5$ a wavelength of 5.861 m.

VOLLATH, U. et. A1: Three or Four Frequencies-How many are enough? In: Proc. of the Institute of Navigation (ION), Portland, USA, 2000 describes the reliability of ambiguity resolution for navigations systems with four carriers.

A systematic search of all possible widelane combinations of L1 and L2 is disclosed in COCARD, M. and GEIGER, A.: Systematic search for all possible widelanes. In: Proc. of 6th Intern. Geodetic Symposium on Satellite Positioning, 1992. The widelane combination and the narrowlane combinations are characterized by the noise amplification, the amplification of the ionospheric error and by the amplification of the multipath error.

Another extension of the widelane technique is the Three Carrier Ambiguity Resolution (TCAR) method which is described in FORSSELL, B.; MARTIN-NEIRA, M. and HARRIS, R.: Carrier Phase Ambiguity Resolution in GNSS-2. In: Proceedings of the Institute of Navigation (ION GPS), Kansas City, 1997. Different widelane combinations of decreasing wavelength are resolved successively. This geometry-free approach is also called Wavelength-Gap-Bridging method and is similar to Cascade Integer Resolution (CIR).

In COLLINS, P.: An overview of GPS inter-frequency carrier phase combinations. In: UNB/GSD, 1999 a method for a systematic search for GPS inter-frequency carrier phase combinations is disclosed. Ionospheric, noise and multipath characteristics are computed for both widelane and narrowlane L1-L2 combinations.

In JUNG, J.: High Integrity Carrier Phase Navigation Using Multiple Civil GPS Signals. In: Ph.D. Thesis, University of Stanford, 2000 three frequency linear combinations for GPS and extended CIR are analyzed by ionospheric gradient estimation.

TEUNISSEN, P.: Least-squares estimation of the integer ambiguities, Invited lecture, Section IV, Theory and Methodology, IAG General Meeting, Beijing, China, 1993 discloses a least square estimation method for resolving phase ambiguities.

DE JONGE, D. and TIBERIUS, C.: The LAMBDA method for integer ambiguity estimation: implementation aspects In: LGR series, Delft University of Technology, pp.1-49, 1996 also discloses a least square estimation method for resolving phase ambiguities.

Further details on methods for resolving the phase ambiguity can also be found in HENKEL, P. and GÜNTHER, C.: Integrity Analysis of Cascade Integer Resolution with Decorrelation Transformations. In: Proceedings of the Institute of Navigation, National Technical Meeting, San Diego, 2007 and in

US 2005/101248 A1.

Proceeding from this related art, the present invention seeks to provide an improved method for processing a set of navigation signals of a global navigation satellite system with at least three carrier signals.

This object is achieved by a method having the features of the independent claim. Advantageous embodiments and refinements are specified in claims dependent thereon.

In the method the sum of the weighting coefficients of the linear combination deviates from zero and the phase ambiguity of the combined phase signal is an integer multiple of the combined wavelength associated with the combined phase signal. Furthermore, the combined ionospheric error or the combined noise associated with the combined phase signal assumes minimized values for a specific combined wavelength. In the context of the present invention minimized values are to be understood to include not only the minimum value for a given combined wavelength but also the second best, preferably also the third best value. Therefore, linear combination of phase measurements which result in the second or third best value for the variation of the ionospheric error or the combined noise shall also be considered as linear combinations associated with minimized values for the ionospheric error or the combined noise.

Since the combination is chosen such that the combined ionospheric error or the combined noise assumes a minimized value the estimation process for the phase ambiguity can be conducted with combined signals that are adapted to the specific problems of the estimation process. In particular, if the ionospheric error is the dominant error source, a combination can be chosen which reduces the ionospheric error as much as possible. In contrast, if the combined noise makes the positioning process difficult, the processing of the navigation signals can be based on a combination, which effectively reduces the combined noise. In consequence, the reliability and the accuracy of the phase resolution process can be significantly improved.

In one embodiment, the weighting coefficients are linear independent. Thus, the ionospheric error and the combined noise is not amplified beyond extent, since the weighting coefficients are kept relatively small.

The same is true, if the weighting coefficients are associated to a single period of the combined wavelength and contained in an interval extending over zero. Restricting the weighting coefficients on a set of coefficients, which is associated with specific periods, also facilitates the search for appropriate weighting coefficients.

In a preferred embodiment, the combined signal is processed according to the double difference method. If the double difference method is applied, clock errors can be efficiently eliminated from the estimation process for the phase ambiguities.

Preferably, the cascade integer resolution method is applied for resolving the phase ambiguity. In such a method, the advantageous properties of specific sets of weighting coefficients can be used in an adaptive way to the requirements of the specific steps. For instance, combinations effectively reducing the ionospheric error can be used in the widelane range, whereas in the narrowlane range combinations of the weighting coefficients may be suitable, which further reduce the combined noise, since the ionospheric error has already been sufficiently determined in previous steps of the cascade integer resolution method.

In another preferred embodiment, three carrier signals are combined to form the combined signals. Currently, three carrier signals are proposed for current satellite navigation systems. By the combination of three carrier signals the positioning process can be significantly improved.

The sum of the weighting coefficients preferably equals one for preserving geometry. Furthermore, if the sum of the weighting coefficient equals one the amplification of the tropospheric error is confined since a sum of weighting coefficients greater one tends to amplify the tropospheric errors. In contrast, a sum of weighting coefficients well below one would overweight the integer ambiguity compared to geometrical errors.

A systematic search for suitable triples of weighting coefficients results in triples for the widelane range, which are minimizing the combined noise or the ionospheric error. Furthermore, triples of the weighting coefficients can be found in the narrowlane range, which reduce efficiently the combined noise.

Preferably, the variation factors associated with the variation of the combined ionospheric error with respect to the single ionospheric error are smaller than the variation factors associated with the variation of the combined noise, since the ionospheric error affects the result of the resolution process much stronger than the combined noise.

Finally, if the sum of the weighting coefficients is allowed to deviate from one particularly advantageous combinations of weighting coefficients can be found, which reduce the ionospheric error up to 31 dB.

Further advantages and properties of the present invention are disclosed in the following description, in which exemplary embodiments of the present invention are explained in detail on the basis of the drawings:

Figure 1      depicts a navigation device for a global navigation satellite system;

Figure 2      shows a diagram with the wavelength $10\log_{10}(\lambda)$ of all 3F widelane combinations in the range from 0.19 m to 29.31 m;

Figure 3      shows a diagram with a selection of 3F widelane combinations by minimum noise amplification for given wavelengths;

Figure 4      shows a diagram with a selection of 3F widelane and narrowlane combinations by minimum ionospheric delay including a linear upper bound;

Figure 5      shows the distribution of reduced noise linear combinations with respect to noise reduction and a lower bound on noise level;

Figure 6      shows a diagram with a selection of 3F narrowlane combinations by minimum noise amplification;

Figure 7      illustrates the trade-off between noise reduction and ionospheric amplification;

Figure 8      further illustrates the trade-off between noise amplification and ionospheric reduction;

Figure 9      depicts the generation of additional linear combinations by coefficient doping;

Figure 10      shows a diagram illustrating the periodicity of the carrier signals; and

Figure 11      is a flow diagram of the processing of navigation signals of the global navigation satellite system according to figure 10.

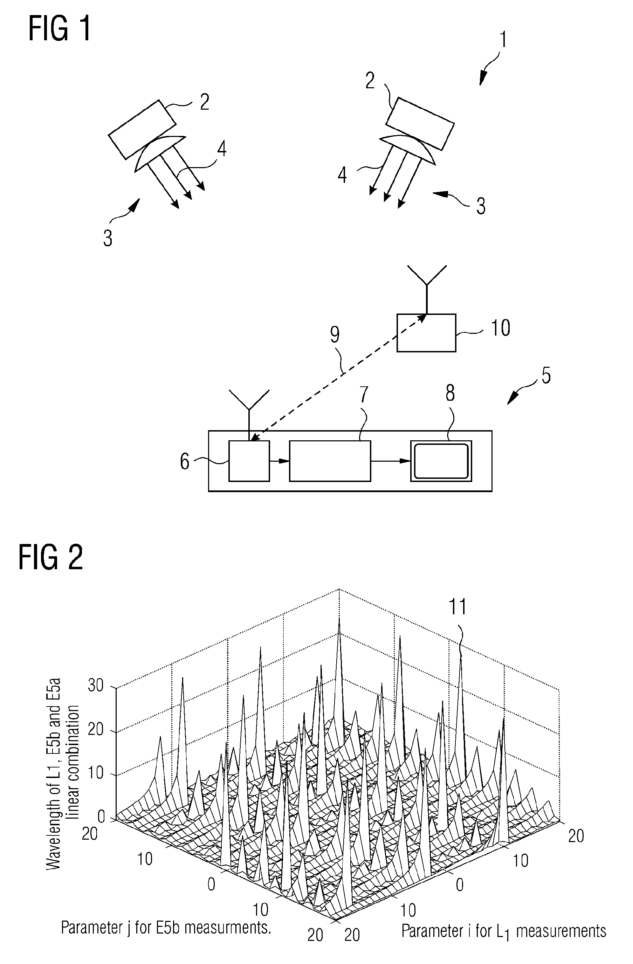

Figure 1 shows a global navigation satellite system 1 which comprises satellites 2 orbiting around the earth and emitting navigation signals 3 modulated on a number of carrier signals 4.

A navigation device 5 comprises a receiver 6 which is connected to a signal processor 7. The signal processor 7 processes the navigation signal 3 received from the satellites 2 and displays the results on a display 8 of the navigation device 5.

For determining the position of the navigation device 5 various methods can be used. In the double difference method the length d of a baseline vector 9 between the navigation device 5 and a reference station 10 is determined by considering the differences between current difference signals from different satellites 2, wherein the difference signals are formed by the differences between the signals emitted by a specific satellite 2 but received from the navigation device 5 and the reference station 10. The distance between the navigation device 3 and the reference station 13 is also called the length of the baseline.

The consideration of linear combinations of phase measurements is an effective method for the resolution of carrier phase ambiguities. Examples of classical combinations are the super-widelane and widelane combinations. The main aspects are to increase the wavelength and to reduce the influence of the ionosphere, while keeping the noise amplification moderate. In the following particularly advantageous combinations are introduced. These combinations leave the geometry invariant. A particular class of such combinations is discrete and finite. An exhaustive search leads to especially advantageous widelane combinations. Some of these combinations have very long wavelengths, for example 29.31 m. Others have excellent ionospheric suppression, for instance 28.78 dB at a wavelength of 3.256 m. The best ionospheric suppression of 38.30 dB is obtained for a narrowlane combination with a wavelength of 2.69 cm.

1. Systematic Search for Widelane Combinations

In this section, requirements for the systematic computation of all Galileo widelane combinations are described.

The carrier phase measurements at the receiver of a navigation device are given by:

$$\lambda_r \phi_{u,r}^k(t) = \rho_u^k(t) + \delta\rho^k(t) + c \cdot \left[\delta t_u(t) - \delta t^k(t-\tau)\right] - I_{u,w}^k(t) + T_u^k(t) + \lambda_w N_{u,w}^k(t) + \varepsilon_{\phi_{u,w}}^k(t) \quad (1)$$

with the following denotations:

$\rho_u^k(t)$ the navigation device to satellite range,

$\delta\rho^k(t)$ the orbital error of the satellite,

$c\delta t_u(t)$ the clock error of the navigation device,

$c\delta t^k(t-\tau)$ the clock error of the satellite,

$I_{u,w}^k(t)$ the ionospheric delay,

$T_u^k(t)$ the tropospheric delay,

$\lambda_w$ the wavelength,

$N_{u,w}^k(t)$ the integer ambiguity,

$\varepsilon_{\phi_{u,w}}^k(t)$ the phase noise, and the user $u$, satellite $k$, frequency $w$ and epoch $t$. For simplicity, only the frequency index is kept. The ionospheric delay at the $w$-th measurement can be expressed as

$$I_w = q_{1w}^2 \cdot I_1 \quad \text{with} \quad q_{1w} = \frac{f_1}{f_w} \,. \quad (2)$$

since the ionospheric error scales with the square of the frequency. Therefore, the phase measurements at the three elementary frequencies of the carrier signals are:

$$\lambda_1 \phi_1 = p + \lambda_1 N_1 - I + \varepsilon_1$$

$$\lambda_2 \phi_2 = p + \lambda_2 N_2 - q_{12}^2 I + \varepsilon_2$$

$$\lambda_3 \phi_3 = p + \lambda_3 N_3 - q_{13}^2 I + \varepsilon_3$$

A three frequency (3F) linear combination is defined as:

$$\begin{aligned}
\lambda\phi &= \alpha\lambda_1\phi_1 + \beta\lambda_2\phi_2 + \gamma\lambda_3\phi_3 \\
&= \rho(\alpha + \beta + \gamma) + \alpha\lambda_1 N_1 + \beta\lambda_2 N_2 + \gamma\lambda_3 N_3 - I(\alpha + \beta q_{12}^2 + \gamma q_{13}^2) + \varepsilon \quad (3) \\
&= \rho + \lambda N - I\eta + \varepsilon
\end{aligned}$$

with the weighting coefficients $\alpha$, $\beta$ and $\gamma$. These parameters are selected such that the geometry is preserved:

$$\alpha + \beta + \gamma = 1 . \qquad (4)$$

Moreover, the weighting coefficients are chosen such that the superposition of ambiguities can be written as an integer multiple N of a common wavelength $\lambda$:

$$\alpha \lambda_1 N_1 + \beta \lambda_2 N_2 + \gamma \lambda_3 N_3 = \lambda N . \qquad (5)$$

The ambiguity of the linear combination is given by

$$N = \underbrace{\frac{\alpha \lambda_1}{\lambda}}_{i} N_1 + \underbrace{\frac{\beta \lambda_2}{\lambda}}_{j} N_2 + \underbrace{\frac{\gamma \lambda_3}{\lambda}}_{k} N_3 . \qquad (6)$$

N is integer valued if the following three sufficient but not necessary requirements are fulfilled:

$$\alpha = \frac{i\lambda}{\lambda_1}, \beta = \frac{j\lambda}{\lambda_2}, \gamma = \frac{k\lambda}{\lambda_3} \text{ and } \{i, j, k\} \in \mathbf{Z} . \qquad (7)$$

Combing equations (4) and (7) yields the wavelength of the linear combination:

$$\lambda = \frac{1}{\frac{i}{\lambda_1} + \frac{j}{\lambda_2} + \frac{k}{\lambda_3}} = \frac{\lambda_1 \lambda_2 \lambda_3}{i\lambda_2\lambda_3 + j\lambda_1\lambda_3 + k\lambda_1\lambda_2} . \qquad (8)$$

With the ordering $\lambda_1 < \lambda_2 < \lambda_3$, the linear combination represents a widelane combination if $\lambda > \lambda_3$, or, equivalently:

$$\lambda_1\lambda_2 > i\lambda_2\lambda_3 + j\lambda_1\lambda_3 + k\lambda_1\lambda_2 > 0 , \qquad (9)$$

which can be simplified to:

$$1 > iq_{13} + jq_{23} + k > 0 . \qquad (10)$$

For a given pair $(i,j)$, the parameter $k$ is uniquely determined:

$$k = \left\lceil -\left(iq_{13} + jq_{23}\right) \right\rceil. \qquad (11)$$

where $\lceil\ \rceil$ denotes a rounding up process. Replacing $k$ in equation (8) yields the wavelength

$$\lambda(i,j) = \frac{\lambda_3}{iq_{13} + jq_{23} + \left\lceil -\left(iq_{13} + jq_{23}\right) \right\rceil}. \qquad (12)$$

This wavelength shows a two-fold cyclic relationship. The wavelength is in particular periodic with respect to $i$ and $j$:

$$\lambda(i,j) = \lambda(i + P_i, j) \Leftrightarrow P_i q_{13} \in \mathbb{Z}$$
$$\lambda(i,j) = \lambda(i, j + P_j) \Leftrightarrow P_j q_{23} \in \mathbb{Z} \qquad (13)$$

with the periods $P_i$ and $P_j$.

In the following linear combinations of L1, E5a, and E5b carrier phase measurements are considered. The Galileo frequencies are specified as

L1: 154 • 10.23MHz, $\lambda_1$= 19.0cm
E5b: 118 • 10.23MHz, $\lambda_2$= 24.8cm
E5a: 115 • 10.23MHz, $\lambda_3$= 25.5cm,

and the periods are obtained from equation (13) as

$$q_{13} = \frac{154}{115} \Rightarrow P_i = 115, \qquad q_{23} = \frac{118}{115} \Rightarrow P_j = 115 \qquad (14)$$

The range of the integer parameters $i$ and $j$ is centered around zero, i.e. $\{i,j\} \in [-57,57]$, and there exist 13225 partially dependent widelane combinations.

Two additional requirements are imposed for the computation of widelane combinations: First, the denominator of equation (8) must be non-zero and secondly, only linear independent combinations are of interest:

$$\mathrm{gcd}\left(i,j,k\right) \overset{!}{=} 1, \qquad (15)$$

with gcd(·) denoting the greatest common divisor.

Figure 2 shows the wavelength of all WL combinations in the range [0.19m ... 29.31m] . The peaks 11 of the $(i,j)$ pattern indicate WL combinations of maximum wavelength.

The noise amplification of a 3F widelane combination due to the combination of the individual phase noises $\varepsilon$ is defined by

$$A_n = \sqrt{\alpha^2 + \beta^2 + \gamma^2} = \lambda \cdot \sqrt{\left(\frac{i}{\lambda_1}\right)^2 + \left(\frac{j}{\lambda_2}\right)^2 + \left(\frac{k}{\lambda_3}\right)^2} \quad , \qquad (16)$$

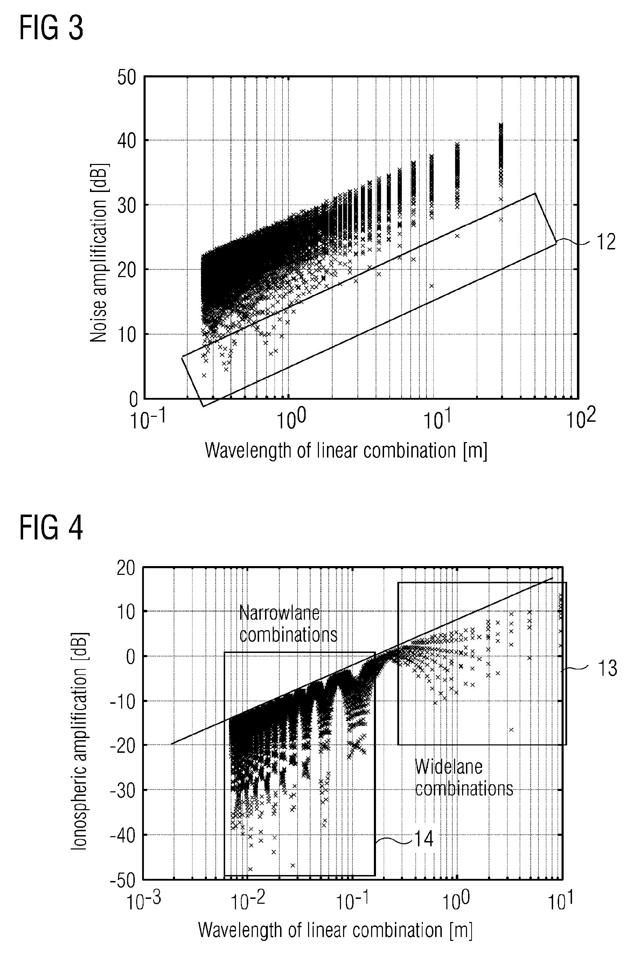

and shown in Figure 3 as a function of the wavelength. As can be readily recognized from Figure 3 the WL combinations always increase the phase noise. However, the advantages associated with the increase in wavelength $\lambda$ partially compensate the higher noise level. But it should also be noted that different combinations, which lead to the same wavelength, actually show different behaviors with respect to noise amplification and ionospheric suppression.

Table I contains a list of WL combinations with moderate noise amplification, sorted according to their wavelength. The combinations listed in Table I are contained within a region of interest 12 depicted in Figure 3.

Since the phase noise $\varepsilon$ of a receiver does typically not depend on the wavelength (the phase noise is defined by the signal to noise ratio and the loop bandwidth of the receiver of the navigation device), the measurement noise $A_n \cdot \varepsilon$ is proportional to the wavelength. As a consequence, it is meaningful to split the noise amplification $A_n$ into a contribution due to the wavelength scaling $A_\lambda = \lambda / \lambda_{L1}$ and a term $\delta A_n$ due to the particular choice of the combination:

$$A_n = A_\lambda \cdot \delta A_n \; . \qquad (17)$$

It is later shown that the ionospheric error depends linear on the wavelength and can be split into two contributions:

$$A_I = A_\lambda \cdot \delta A_I \; . \qquad (18)$$

The largest wavelength turns out to be 29.31 m which is nearly twice the size of the GPS extra-widelane (EW) combination presented by Cocard and Geiger.

At a wavelength of 3.256 m a linear combination could be found, which reduces the ionospheric error by 28.78 dB.

A lower bound can be analytically derived for the noise amplification of a WL combination ($\lambda > \lambda_3 > \lambda_2 > \lambda_1$):

$$A_n > \lambda(i,j,k) \cdot \sqrt{\left(\frac{i}{\lambda_3}\right)^2 + \left(\frac{j}{\lambda_3}\right)^2 + \left(\frac{k}{\lambda_3}\right)^2} = \frac{\lambda}{\lambda_3} \cdot \sqrt{i^2 + j^2 + k^2} > \sqrt{i^2 + j^2 + k^2} > 1 \; , \quad (19)$$

Consequently no 3F WL combination satisfies the noise reduction criterion in the range domain.

2. Systematic Search of Reduced Ionosphere Combinations

The reduction of the ionospheric error is a major aspect in the consideration of linear combinations. If this error can be reduced to a level that there is no more impact on the ambiguity resolution, it can be neglected. Otherwise the ionospheric error has to be estimated explicitly or needs to be eliminated by appropriate differencing. The ionospheric error is lowered if Collins' criterion in cycle domain is fulfilled:

$$\left| i + j \cdot q_{12} + k \cdot q_{13} \right| < 1 \; . \qquad (20)$$

For a given pair $(i,j)$, there exist up to two values for $k$ which satisfy the inequality:

$$k = \left\{ \begin{array}{c} \left[ \dfrac{-1-i-jq_{12}}{q_{13}} \right] \\ \left[ \dfrac{+1-i-jq_{12}}{q_{13}} \right] \end{array} \right. . \qquad (21)$$

Replacing $k$ in equation (8) by (21) shows that the wavelength of reduced ionospheric combinations has larger periods:
$P_i = 115 \cdot 154 = 17710$ and $P_j = 115 \cdot 118 = 13570$.

The ionospheric amplification is obtained from equations (1) - (3) and (7)as

$$A_I = \left| \alpha + \beta q_{12}^2 + \gamma q_{13}^2 \right| = \lambda \cdot \left| \frac{i}{\lambda_1} + \frac{j}{\lambda_2} q_{12}^2 + \frac{k}{\lambda_3} q_{13}^2 \right| , \qquad (22)$$

and visualized as a function of the wavelength in Figure 4. The worst combinations show a wavelength dependency that is algebraic with an exponent very close to 1. This suggests the splitting of the ionosphere in equation (18). The largest ionospheric reduction is $A_I = $ -16.4 dB within a widelane (WL) region 13 and $A_I = $ 47.7 dB with a narrowlane (NL) region 14.

A. Reduced Ionosphere Widelane Combinations

The advantageous property of 3F combinations is that there exist widelane combinations which substantially reduce the ionospheric error (Table II). This is in clear contrast to 2F combinations which do not have this property.

Table IIa contains 3F combinations with second best ionospheric reduction.

B. Reduced Ionosphere Narrowlane Combinations

Narrowlane (NL) combinations ($\lambda < \lambda_1 < \lambda_2 < \lambda_3$) satisfy the inequality

$$i\lambda_2\lambda_3 + j\lambda_1\lambda_3 + k\lambda_1\lambda_2 \geq \lambda_2\lambda_3 . \qquad (23)$$

Figure 4 shows that only 12.5 dB of the total gain of $A_I = $ -47.7 dB can be explained by the wavelength dependency of the 1.07 cm linear combination. The remaining gain of 35.2 dB is due to the proper choice of the combination.

3F Ionosphere-Free (IF) combinations are listed in Table IV. Among all 3F IF combinations, the E5a - E5b IF combination has the largest wavelength of 4.19 cm. If the ionospheric and noise amplifications of the 4.19 cm IF combination in Table IV are compared to the ionospheric and noise amplifications of the 5.43 cm NL combination of Table III it has to be realized that the 4.19 cm IF combination suffers from the large noise amplification $\delta A_n = $ 20.96 dB which is 11.48 dB larger than of the 5.43 cm NL combination. Furthermore it should be noted that the 5.43 cm LN combination still attenuates the ionospheric error by -36.7 dB. Therefore it seems to be reasonable to attenuate the ionospheric error rather than using the IF combinations.

However, reduced ionosphere NL combinations still suffer from noise amplification (Table III) which motivates the optimization criterion of the following section.

3. Systematic Search of Linear Combinations with Reduced Noise.

The linear combination is characterized by a lower noise level than the elementary phase measurements if

$$\alpha^2 + \beta^2 + \gamma^2 < 1 , \qquad (24)$$

which is equivalent to

$$\left(\frac{i}{\lambda_1}\right)^2 + \left(\frac{j}{\lambda_2}\right)^2 + \left(\frac{k}{\lambda_3}\right)^2 < \frac{1}{\lambda^2}. \qquad (25)$$

Combining equations (8) and (25) yields the inequality

$$ij\cdot\lambda_3 + ik\cdot\lambda_2 + jk\cdot\lambda_1 > 0, \qquad (26)$$

with the solution for the parameter $k$:

$$k > \frac{-ij\lambda_3}{i\lambda_2 + j\lambda_1} \qquad \text{if} \qquad i\lambda_2 + j\lambda_1 > 0 \qquad (27)$$

and

$$k < \frac{-ij\lambda_3}{i\lambda_2 + j\lambda_1} \qquad \text{if} \qquad i\lambda_2 + j\lambda_1 < 0$$

Since $A_n$ assumes a minimum if $\alpha$, $\beta$ and $\gamma$ have the same values, the noise level of 3F combinations is lower bounded by:

$$A_n \geq \sqrt{\left(\frac{1}{3}\right)^2 + \left(\frac{1}{3}\right)^2 + \left(\frac{1}{3}\right)^2} \approx 0.577 \approx -2.38\text{dB}. \qquad (28)$$

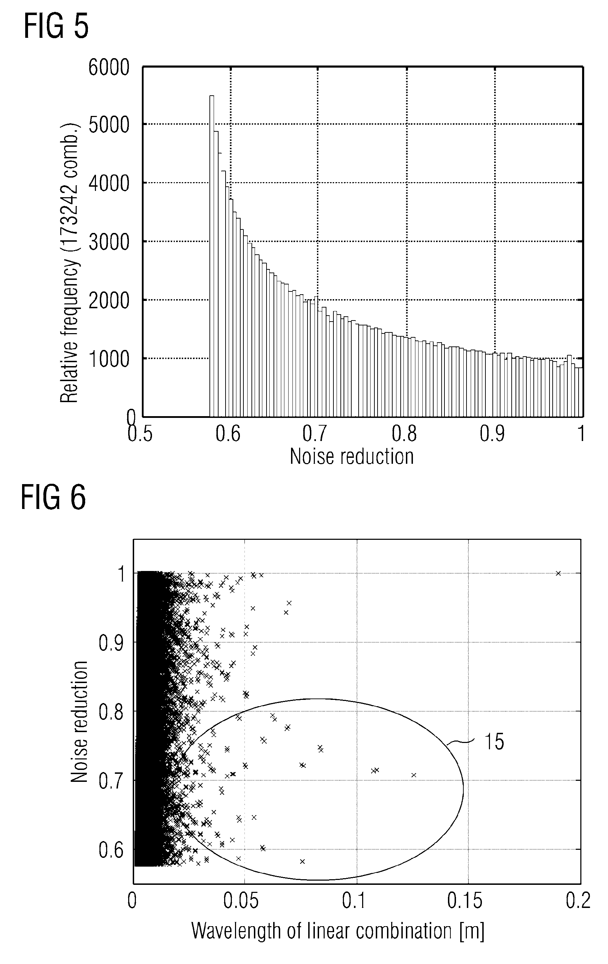

Figure 5 shows a histogram of 173242 reduced noise linear combinations. The lower bound in equation (28) is well approximated by a large number of combinations.
Reduced noise linear combinations and a lower bound on noise level reduced noise combinations are always NL ones which can be easily proved from inequality (25):

$$\lambda < \frac{1}{\sqrt{\left(\frac{i}{\lambda_1}\right)^2 + \left(\frac{j}{\lambda_2}\right)^2 + \left(\frac{k}{\lambda_3}\right)^2}} < \frac{1}{\sqrt{\left(\frac{i}{\lambda_3}\right)^2 + \left(\frac{j}{\lambda_3}\right)^2 + \left(\frac{k}{\lambda_3}\right)^2}} =$$

$$(29)$$

$$= \frac{1}{\sqrt{i^2 + j^2 + k^2}}\cdot\lambda_3 < \frac{1}{\sqrt{2}}\cdot\lambda_3 < \lambda_1$$

Table V shows the combinations sorted according to their wavelength. The combinations listed in Table V have been selected from a region of interest 15 in Figure 6.

The [i,j,k] = [1, 1, 1] combination has a wavelength of $\lambda$ = 7.57 cm and almost achieves the lower noise bound from equation (28) at the price of a slight ionospheric amplification. The corresponding weighting coefficients are given by [$\alpha$, $\beta$, $\gamma$] = [0.40, 0.30, 0.30] .

#### 4. Trade-off between Noise Reduction and Ionospheric Amplification

It has been shown in the previous section that noise reduction can be achieved only with NL combinations. The reduction of both noise and ionosphere corresponds to two contrary objectives.

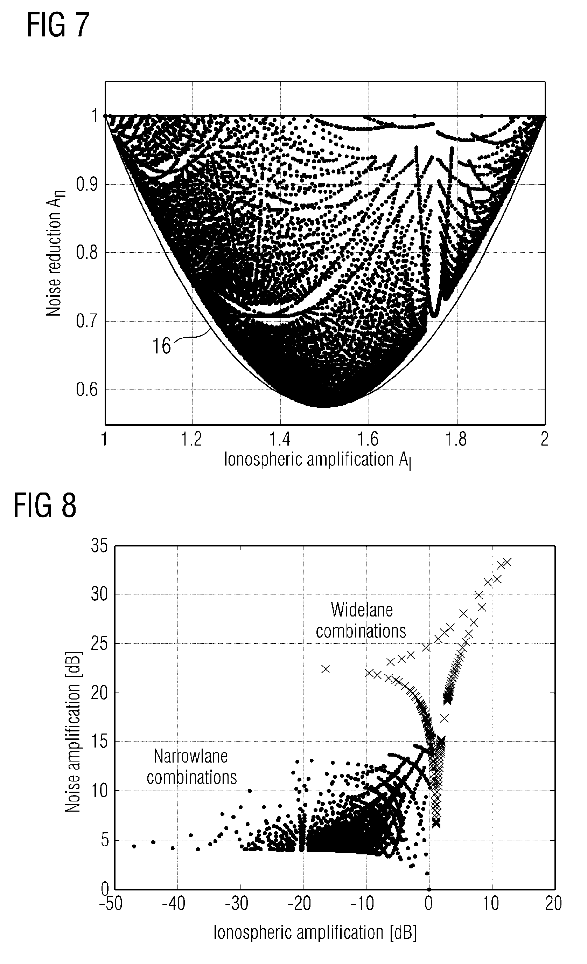

Figure 7 illustrates the trade-off between both quantities for all NL combinations with $\{i,j,k\} \in$ [-20,+20].

The region of NL combinations can be bounded by a quadratic function:

$$\frac{1}{\sqrt{3}} + 4 \cdot \frac{\sqrt{3}-1}{\sqrt{3}} \cdot \left( A_I - \frac{3}{2} \right)^2 < A_n < 1 \; . \tag{30}$$

whose outline 16 is depicted in Figure 7. The maximum noise reduction is associated with an ionospheric amplification of 50%.

On the contrary, reduced ionosphere WL combinations are always characterized by an effective noise amplification $A_n$.

Figure 8 visualizes the trade-off between $A_n$ and $A_I$ for both WL and NL combinations of reduced ionosphere with $\{i,j,k\} \in$ [-30,+30].

#### 5. Second Order Ionospheric Delay of Linear Combinations

Linear combinations also affect higher order ionospheric terms which play a major role once first order terms are eliminated either by estimation or elimination.

The amplification of the first two orders is given by

$$A_{I_1} = \alpha + \beta q_{12}^2 + \gamma q_{13}^2$$

.

$$A_{I_2} = \alpha + \beta q_{12}^3 + \gamma q_{13}^3$$

Table VI shows the properties of selected widelane combinations with reduced first-order ionospheric errors. Some combinations benefit from a reduction of both first and second order effects. For example the [1,-9, 8] combination reduces second order effects by up to 17.71 dB.

The reduction of ionospheric errors extends the baseline length where reliable integer ambiguity resolution can be guaranteed.

#### 6. Overcoming Rank Deficency of Reduced Ionosphere Widelane Combinations: Doping of Linear Combinations

The unambiguous determination of the elementary $N_1$, $N_2$ and $N_3$ ambiguities requires a set of three linear independent combinations,. Therefore the coefficient matrix of integer ambiguities

$$M = \begin{bmatrix} i_1 & j_1 & k_1 \\ i_2 & j_2 & k_2 \\ i_3 & j_3 & k_3 \end{bmatrix} \; . \tag{31}$$

should be of full rank R = 3 as described in TEUNISSEN, P. and KLEUNSBERG, A. In: GPS for Geodesy, Springer, New York, 2nd edition, 1998.

It is suggested to use code and super widelane (SWL) ($\lambda$ = 9.768 m in Table I) measurements for the first step of Cascade Integer Resolution (CIR). In the second step, the ambiguities of the [1,-10, 9] linear combination ($\lambda$ = 3.256 m in Table I) are resolved using code and SWL measurements and its ambiguities as a priori knowledge. Both steps are characterized by large wavelengths and strong ionospheric suppression.

The linear combination of the third CIR step is optimized: An exhaustive search has been performed for reduced ionosphere WL combinations that fulfill the full rank criterion and $\{i,j\}\in$ [-100,+100]. Unfortunately, all WL combinations of significant ionospheric suppression in Table II are rank deficient regarding the first two CIR combinations. The only WL combinations that fulfill the full rank criterion suffer from unacceptable noise amplification.

The search of a new 3F, reduced ionosphere WL combination satisfying R = 3 motivates the following doping scheme. The geometry-preserving condition of the linear combination is given up:

$$\alpha + \beta + \gamma = \tau , \qquad (32)$$

Thus, the geometry is scaled by $\tau$. The weighting coefficients $\alpha$, $\beta$ and $\gamma$ are designed such that the superposition of ambiguities can be expressed as an integer multiple of a common wavelength $\lambda$ in equations (5)-(7):

$$\lambda = \frac{\tau}{\frac{i}{\lambda_1} + \frac{j}{\lambda_2} + \frac{k}{\lambda_3}} = \tau \cdot \frac{\lambda_1 \lambda_2 \lambda_3}{i\lambda_2\lambda_3 + j\lambda_1\lambda_3 + k\lambda_1\lambda_2} \ . \qquad (33)$$

The WL criterion of equation (10) is generalized to

$$\tau > iq_{13} + jq_{23} + k > 0 \ . \qquad (34)$$

The scaling factor $\tau$ is chosen sufficiently large such that the parameter $k$ of equation (11) is doped to

$$k = \lceil -(iq_{13} + jq_{23}) \rceil + p , \qquad (35)$$

with the integer doping $p$. For a given doping $p$, the minimum scaling factor $\tau$ is given by

$$\tau_{\min} = iq_{13} + jq_{23} + k + \varepsilon = q_{13} + jq_{23} + \lceil -(iq_{13} + jq_{23}) \rceil + p + \varepsilon_M, \qquad (36)$$

with the machine precision $\varepsilon_M$. Replacing $\tau$ in equation (33) by (36) yields $\lambda \approx \lambda_3$ .

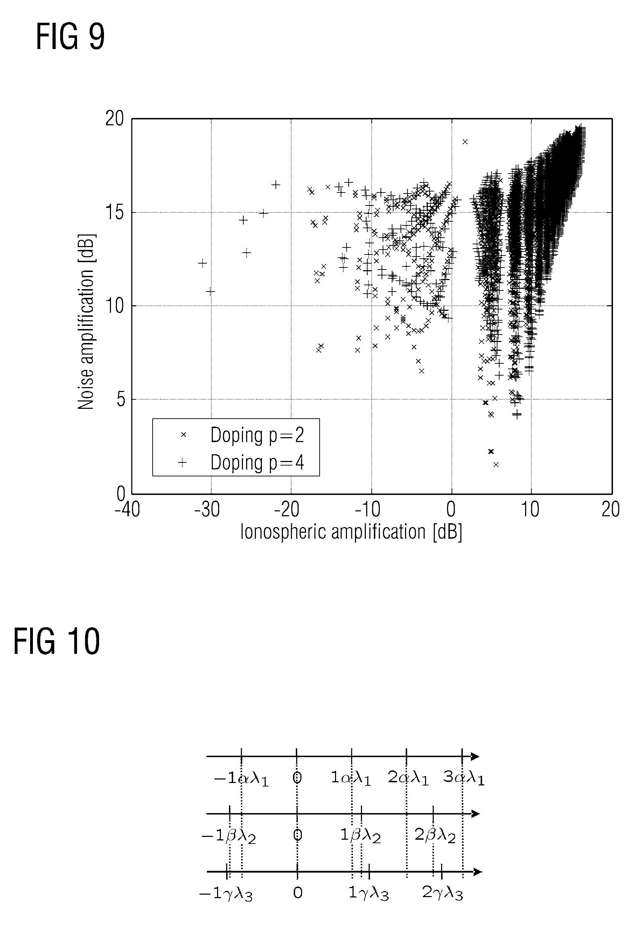

In Figure 9, the trade-off between ionospheric reduction and noise amplification is shown for doped linear combinations with $\{i,j\}\in$[-30,+30]. Doping the third parameter in the linear combination [8,-1, -9] by $p$ = 4 yields the [8, -1, -5] combination which is characterized by an ionospheric reduction of more than 30 dB. The price of ionospheric suppression is a noise amplification by 10dB and an increase of the tropospheric error by $\tau_{\min}$. Simulation results indicate that small even doping terms $p$ achieve better ionospheric reduction than small odd values.

Table VII shows selected linear combinations with strong ionospheric reduction and variable doping $p$. The doping provides a third linear combination that fulfills the full-rank criterion and outperforms the elementary L1, E5a or E5b measurements due to ionospheric suppression.

Once the integer ambiguities of the three CIR steps are fixed, the elementary $N_1$, $N_2$ and $N_3$ ambiguities can

be computed analytically:

$$\begin{bmatrix} N_1 \\ N_2 \\ N_3 \end{bmatrix} = M^{-1} \cdot \begin{bmatrix} N_{9.768} \\ N_{3.256} \\ N_{0.255} \end{bmatrix}. \qquad (37)$$

## 7. Linear Combinations Resulting in any Combined Wavelength

In a modified embodiment linear combinations resulting in any combined wavelength are possible. If the parameter $\alpha$ can be freely chosen the remaining parameters are constraint by the following requirements:

$$\beta \lambda_2 = m \cdot \alpha \lambda_1 , \quad m \in Z$$

$$\gamma \lambda_3 = n \cdot \alpha \lambda_1 , \quad n \in Z$$

These requirements are illustrated in Figure 10. The weighting coefficients $\beta$ and $\gamma$ for $\lambda_2$ and $\lambda_3$ must be chosen such that the resulting wavelength is an integer multiple of the modified wavelength $\alpha \lambda_1$. Then the linear combination can be written as:

$$\phi = \alpha \left( 1 + m \cdot \frac{\lambda_1}{\lambda_2} + n \cdot \frac{\lambda_1}{\lambda_3} \right) \rho + \underbrace{\alpha \lambda_1}_{\lambda} \underbrace{(N_1 + mN_2 + nN_3)}_{N} - \alpha \left( 1 + q_{12}^2 \frac{m\lambda_1}{\lambda_2} + q_{13}^2 \frac{n\lambda_1}{\lambda_3} \right) \cdot I + \varepsilon$$

and the standard deviation of the noise can be written as:

$$A_n = \alpha \sqrt{ 1 + \left( \frac{m\lambda_1}{\lambda_2} \right)^2 + \left( \frac{n\lambda_1}{\lambda_3} \right)^2 }$$

The standard deviation of the noise and the ionospheric error therefore increase linearly with $\alpha$. Minimizing the standard deviation results in $m = 1$ and $n = -1$. Thus the coefficients of the phase measurement are fixed:

$$\alpha = \lambda / \lambda_1$$

$$\beta = \lambda / \lambda_2$$

$$\gamma = -\lambda / \lambda_3$$

Table VIII shows without loss of generality some linear combinations for specific wavelengths.

8. Processing Linear Combinations

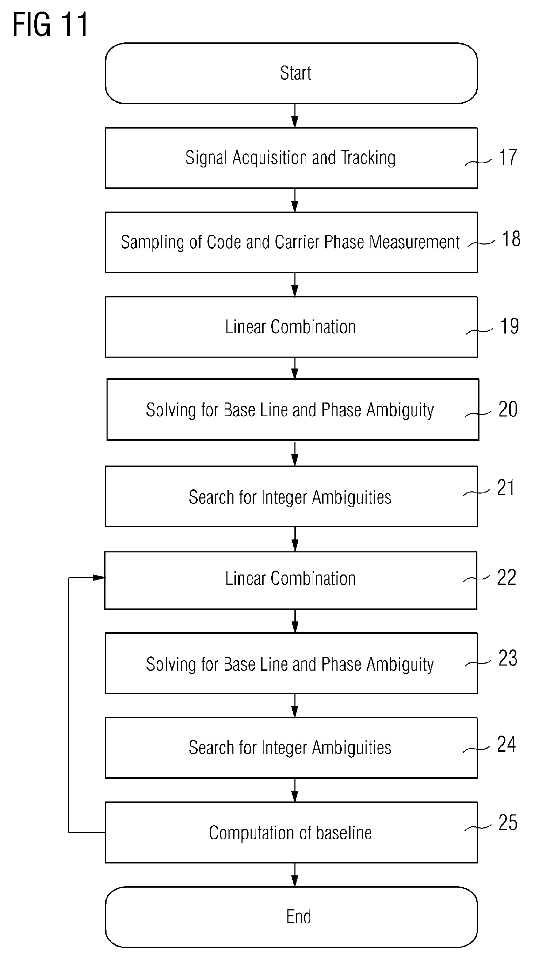

Figure 11 shows a flow diagram of a method for processing the navigation signals 3 by the signal processor 7.

The method starts with acquisition and tracking 17 of the navigation signals. During this method step the phase of the carrier signals is continuously received and tracked, so that the phasings of the carrier signals must only be determined once. In practice, however, the phasings are determined repeatedly so that errors during the acquisition and tracking process 17 can be eliminated.

In the next step a sampling 18 takes place in which the code and carrier phase measurements of at least one epoch are sampled. Then a combined signal having a large wavelength is formed by a geometry preserving linear combination 19 of various carrier phase signals. Further on, the base line and the phase ambiguities are determined by solving 20 a double difference equation system by a least-square method. The solving 20 not necessarily results in integer numbers for the phase ambiguity but generally in reel numbers. Therefore, suitable integer phase ambiguities must be determined in a search 21 for corresponding integer valued phase ambiguities. The search 21 can be performed, for instance, by using the LAMBDA-algorithm.

In the following, another combined signal is formed by a further linear combination 22 of the carrier signals. The additional combined signal may have a shorter wavelength than the previously combined signal and may be associated with a stronger ionospheric suppression. Furthermore, the newly combined signal should finally result in a full rank integer coefficient matrix if the coefficient matrix is intended to be inverted for obtaining the elementary phase ambiguities of the elementary carrier signals 4.

The equations concerning the additional combined signal are added to the double difference equation system. The phase ambiguities and the length of the baseline are determined by solving 23 of the phase equation system. Solving 23 does not necessarily result in integer numbers for the phase ambiguity so that in a next step a search 24 for integer numbers is performed which results in corresponding integer numbers for the phase ambiguities of the combined signals. Once again the LAMBDA-algorithm may be used for search 24.

Finally a computation 25 of the baseline using the fixed phase ambiguities is performed. The computation 25 of the baseline may include the computation of the elementary phase ambiguities by means of the inverted coefficient matrix. But the computation 25 of the baseline can also be performed using a specific combined wavelength. In this case the coefficient matrix may be rank deficient.

Depending on the requirements on the accuracy of the positioning process the combination 22, solving 23 and search 24 and the computation 25 can be repeated.

The method shown in Figure 11 may be implemented according to the Cascade Integer Resolution scheme.

Cascade Integer Resolution is based on multiple linear combinations of successively reduced wavelengths. The integer ambiguities can not directly be solved from stand alone carrier phase measurements of a single epoch due to an under-determined equation system. Therefore, the measurements of further epochs or additional code measurements are taken into account.

In the first step, a widelane combination, for instance the E5a-E5b SWL combination, is computed and the integer ambiguities are resolved using an additional ionosphere-free code combination. The equation system according to the double difference method can then be written as:

$$\begin{bmatrix} \lambda^{(1)}\phi^{(1)} \\ \rho \end{bmatrix} = \begin{bmatrix} G \\ G \end{bmatrix} \delta x + \begin{bmatrix} \lambda^{(1)} \cdot 1 \\ 0 \end{bmatrix} \cdot N^{(1)} + \begin{bmatrix} \varepsilon_\phi^{(1)} \\ \varepsilon_\rho^{(1)} \end{bmatrix}$$

where $\rho$ is the navigation to satellite range obtained from a code measurement, G contains the differences of the base vectors directed from the navigation device 5 to the satellites 2, 1 is a unity matrix whose rang corresponds to the number of satellites 2 minus one, $\varepsilon_\phi$ and $\varepsilon_\rho$ contains all errors including the ionospheric error. This phase equation system is solved for $\delta x$ and $N^{(1)}$.

In the second step, the integers of another linear combination of lower wavelength and stronger ionospheric suppression, for example the 3.256 m linear combination) are estimated by the means of the combined measurements from the actual and previous step. The integer ambiguities of the first step are used as a priori knowledge. Therefore, the following set of combinations is considered:

$$\begin{bmatrix} \lambda^{(1)} \cdot (\phi^{(1)} - N^{(1)}) \\ \lambda^{(2)} \cdot \phi^{(2)} \\ \rho \end{bmatrix} = \begin{bmatrix} G \\ G \\ G \end{bmatrix} \delta x + \begin{bmatrix} 0 \\ \lambda^{(2)} \cdot 1 \\ 0 \end{bmatrix} \cdot N^{(2)} + \begin{bmatrix} \varepsilon^{(1)} \\ \varepsilon^{(2)} \\ \varepsilon_\rho \end{bmatrix}$$

Finally, a third linear combination is determined with a lower wavelength and even stronger ionospheric suppression than any one of the previous combinations. The selection of the third combination may also be restricted by the constraint of a full rank integer coefficient matrix. If a full rank coefficient matrix is requested the [8,-1,-5] doped linear combination ($\lambda$ = 0.2548 m) is an example of a doped combination which fulfils these requirements.

The combined code and carrier phase measurements of the first two steps are again used with the estimated ambiguities as a priori knowledge. The set of combinations of the third step is then given by:

$$\begin{bmatrix} \lambda^{(1)} \cdot (\phi^{(1)} - N^{(1)}) \\ \lambda^{(2)} \cdot (\phi^{(2)} - N^{(2)}) \\ \lambda^{(3)} \cdot \phi^{(3)} \\ \rho \end{bmatrix} = \begin{bmatrix} G \\ G \\ G \\ G \end{bmatrix} \delta x + \begin{bmatrix} 0 \\ 0 \\ \lambda^{(3)} \cdot 1 \\ 0 \end{bmatrix} \cdot N^{(3)} + \begin{bmatrix} \varepsilon^{(1)} \\ \varepsilon^{(2)} \\ \varepsilon^{(3)} \\ \varepsilon_\rho \end{bmatrix}$$

All three linear combinations significantly suppress the ionospheric error and are linearly independent such that the elementary L1, E5b and E5a phase ambiguities can be computed.

Besides these combinations also other combinations can be used. Among all combination the combinations with maximum attenuation of the ionospheric error are preferred.

## 9. Further Embodiments

The proposed concept can be extended to four frequency (4F) combinations including E6 carrier phase measurements. The wavelength of 4F widelane combinations is characterized by a three-fold cyclic relationship. Also more than three frequencies can be taken into consideration.

Although the concept has been discussed in detail with respect to the Galileo satellite system, the proposed concept can also be extended to the GPS navigation system. Table IX, X and XI contain GPS widelane combinations, reduced ionosphere WL combinations and reduced ionosphere NL combinations.

For calculating the GPS combinations the L1, L2 and L5 carrier phase measurements have been considered. The GPS frequencies are specified as:

L1: 154 • 10.23MHz, $\lambda_1$ = 19.0 cm
L2: 120 • 10.23MHz, $\lambda_2$ = 24.4 cm
L3: 115 • 10.23MHz, $\lambda_3$ = 25.5 cm,

and the periods are obtained from equation (13) as:

$$q_{13} = \frac{154}{115} \Rightarrow P_i = 115, \qquad q_{23} = \frac{120}{115} \Rightarrow P_j = 23 \qquad (14)$$

The concept can furthermore also be extended to the Glonass satellite system or any other present or future satellite system with at least three carrier signals.

## 10. Advantages

In this application linear combinations of three phase measurements for Galileo were analyzed. The set of combinations was chosen to preserve the geometry and to fulfill a natural requirement, which enforces the integer nature of the ambiguities. This leads to a set of 13225 widelane combinations that could be searched exhaustively. It led to some interesting new combinations with long wavelengths, good ionospheric suppression, and small noise amplification.

Noise reduction can only be obtained from narrowlane combinations and is related to the shortened wavelength.

Narrowlane combinations can furthermore significantly reduce the ionospheric error even if the wavelength scaling is taken into account.

The optimized combinations have been compared to 3F ionosphere-free combinations. A narrowlane combination at 5.43cm benefits from a 11.48 dB lower noise level than the ionosphere-free combination.

The proposed concept can be extended to four frequency (4F) combinations including E6 carrier phase measurements. The wavelength of 4F widelane combinations is characterized by a three-fold cyclic relationship.

Although the concept has been discussed in detail with respect to the Galileo satellite system, the proposed concept can also be extended to the GPS navigation system. The concept can furthermore also be extended to the Glonass satellite navigation system or any other present or future satellite system with at least three carrier signals. The concept can finally also be applied to so called pseudolites which are pseudo satellites typically implemented as ground based transmitter that broadcast a signal corresponding to the signals of the satellites 2 of the navigation satellite system 1.

Throughout the description and claims of this specification, the singular encompasses the plural unless the context otherwise requires. In particular, where the indefinite article is used, the specification is to be understood as contemplating plurality as well as singularity, unless the context requires otherwise.

Features, integers, characteristics, compounds or groups described in conjunction with a particular aspect, embodiment or example of the invention are to be understood to be applicable to any other aspect, embodiment or example described herein unless incompatible therewith.

In the following tables, the combinations, which contain in the column with the header NEW the letter X, are to be understood as marked NEW.

Table I:

| $\lambda$ [m] | i | j | k | $A_n$ [dB] | $A_I$ [dB] | $A_\lambda$ | $\delta A_n$ [dB] | $\delta A_I$ [dB] | NEW |
|---|---|---|---|---|---|---|---|---|---|
| Galileo 3F WL Combinations of Minimum Noise Amplification | | | | | | | | | |
| 29.310 | -3 | 1 | 3 | 27.70 | 25.53 | 21.88 | 5.82 | 3.65 | X |
| 14.650 | 3 | 0 | -4 | 25.13 | 22.58 | 18.87 | 6.26 | 3.71 | X |
| 9.768 | 0 | 1 | -1 | 17.40 | 2.42 | 17.11 | 0.29 | -14.69 | |
| 7.326 | -3 | 2 | 2 | 21.52 | 19.45 | 15.86 | 5.66 | 3.59 | X |
| 5.861 | 3 | 1 | -5 | 21.74 | 18.67 | 14.89 | 6.85 | 3.78 | X |
| 4.884 | -9 | 4 | 8 | 24.60 | 22.50 | 14.10 | 10.50 | 8.40 | X |
| 4.186 | -3 | 3 | 1 | 19.28 | 16.95 | 13.43 | 5.85 | 3.52 | X |
| 3.663 | 3 | 2 | -6 | 20.33 | 16.69 | 12.85 | 7.48 | 3.84 | X |
| 3.256 | 1 | -10 | 9 | 22.44 | -16.44 | 12.34 | 10.10 | -28.78 | X |
| 2.931 | -3 | 4 | 0 | 18.20 | 15.33 | 11.88 | 6.32 | 3.45 | X |
| 2.664 | 3 | 3 | -7 | 19.56 | 15.36 | 11.47 | 8.09 | 3.89 | X |
| 2.442 | 1 | -9 | 8 | 20.71 | -3.76 | 11.09 | 9.62 | -14.85 | X |
| 2.254 | -3 | 5 | -1 | 17.66 | 14.13 | 10.74 | 6.92 | 3.39 | X |
| 2.093 | 3 | 4 | -8 | 19.08 | 14.38 | 10.42 | 8.66 | 3.96 | X |
| 1.954 | 1 | -8 | 7 | 19.21 | -1.64 | 10.12 | 9.09 | -11.76 | X |
| 1.832 | -3 | 6 | -2 | 17.38 | 13.16 | 9.84 | 7.54 | 3.32 | X |
| 1.724 | 4 | -8 | 3 | 18.41 | 13.41 | 9.58 | 8.83 | 3.83 | X |

Table II:

| $\lambda$ [m] | i | j | k | $A_n$[dB] | $A_I$[dB] | $A_\lambda$ | $\delta A_n$[dB] | $\delta A_I$[dB] | NEW | |
|---|---|---|---|---|---|---|---|---|---|---|
| Galileo 3F WL Combinations with Maximum Ionospheric Reduction | | | | | | | | | | |
| 4.884 | 1 | -11 | 10 | 24.62 | -0.41 | 14.10 | 10.52 | -14.51 | X | |
| 3.256 | 1 | -10 | 9 | 22.43 | -16.44 | 12.34 | 10.09 | -28.78 | X | |

(continued)

| Galileo 3F WL Combinations with Maximum Ionospheric Reduction | | | | | | | | | | |
|---|---|---|---|---|---|---|---|---|---|---|
| λ [m] | i | j | k | $A_n$[dB] | $A_I$[dB] | $A_\lambda$ | $\delta A_n$[dB] | $\delta A_I$[dB] | NEW | |
| 2.442 | 1 | -9 | 8 | 20.71 | -3.76 | 11.09 | 9.62 | -14.85 | X | |
| 1.954 | 2 | -21 | 19 | 23.44 | -4.23 | 10.12 | 13.32 | -14.35 | X | |
| 1.628 | 1 | -7 | 6 | 17.81 | -0.64 | 9.33 | 8.48 | -9.97 | X | |
| 1.395 | 2 | -19 | 17 | 21.53 | -6.37 | 8.66 | 12.87 | -15.03 | X | |
| 1.221 | 3 | -31 | 28 | 23.09 | -6.12 | 8.08 | 15.01 | -14.20 | X | |
| 1.085 | 2 | -17 | 15 | 19.94 | -2.46 | 7.57 | 12.37 | -10.03 | X | |
| 0.976 | 3 | -29 | 26 | 21.82 | -8.11 | 7.11 | 14.71 | -15.22 | X | |
| 0.888 | 4 | -41 | 37 | 22.92 | -7.36 | 6.70 | 16.22 | -14.06 | X | |
| 0.814 | 5 | -53 | 48 | 23.66 | -3.32 | 6.32 | 17.34 | -9.64 | X | |
| 0.751 | 4 | -39 | 35 | 21.97 | -9.45 | 5.97 | 16.00 | -15.42 | X | |
| 0.697 | 5 | -51 | 46 | 22.82 | -8.26 | 5.64 | 17.18 | -13.90 | X | |
| 0.651 | 4 | -37 | 33 | 21.11 | -4.79 | 5.35 | 15.76 | -10.14 | X | |
| 0.610 | 5 | -49 | 44 | 22.06 | -10.56 | 5.07 | 16.99 | -15.63 | X | |
| 0.574 | 5 | -48 | 43 | 21.70 | -7.31 | 4.80 | 16.90 | -12.11 | X | |
| 0.542 | 5 | -47 | 42 | 21.36 | -5.64 | 4.55 | 16.81 | -10.19 | X | |
| 0.514 | 5 | -46 | 41 | 21.03 | -4.55 | 4.32 | 16.71 | -8.87 | X | |

Table IIa:

| Galileo 3F WL Combinations with Second Best Ionospheric Reduction | | | | | | |
|---|---|---|---|---|---|---|
| λ [m] | i | j | k | An [dB] | $A_I$ [dB] | NEW |
| 4.884 | -1 | 15 | -14 | 26.02 | 6.44 | X |
| 3.256 | 2 | -23 | 21 | 26.08 | 2.53 | X |
| 2.442 | 3 | -35 | 32 | 26.65 | 3.49 | X |
| 1.954 | 1 | -8 | 7 | 19.21 | -1.64 | X |
| 1.628 | -1 | 19 | -18 | 22.30 | 4.20 | X |
| 1.395 | 3 | -32 | 29 | 23.82 | -2.77 | X |
| 1.221 | 1 | -5 | 4 | 15.03 | 0.35 | X |
| 1.085 | 4 | -43 | 39 | 24.01 | -2.13 | X |
| 0.976 | 1 | -3 | 2 | 11.75 | 0.85 | X |
| 0.888 | 3 | -28 | 25 | 21.25 | -5.24 | X |
| 0.814 | 1 | -1 | 0 | 7.32 | 1.16 | |
| 0.751 | 5 | -52 | 47 | 23.23 | -5.30 | X |
| 0.697 | 3 | -25 | 22 | 19.69 | -2.15 | X |
| 0.651 | 2 | -11 | 9 | 15.74 | 0.17 | X |
| 0.610 | 3 | -23 | 20 | 18.74 | -1.24 | X |
| 0.574 | 4 | -35 | 31 | 20.32 | -3.03 | X |
| 0.542 | 1 | 5 | -6 | 12.32 | 1.62 | X |

(continued)

| Galileo 3F WL Combinations with Second Best Ionospheric Reduction | | | | | | |
|---|---|---|---|---|---|---|
| λ [m] | i | j | k | An [dB] | $A_l$ [dB] | NEW |
| 0.514 | 4 | -33 | 29 | 19.57 | -2.01 | X |

Table III:

| Galileo 3F NL Combinations with Maximum Ionospheric Reduction | | | | | | | | | | |
|---|---|---|---|---|---|---|---|---|---|---|
| λ [cm] | i | j | k | $A_n$[dB] | $A_l$[dB] | $A_\lambda$ | $\delta A_n$[dB] | $\delta A_l$[dB] | NEW | |
| 0.74 | 54 | 52 | -91 | 5.66 | -38.6 | -14.10 | 19.76 | -24.50 | X | |
| 0.77 | 57 | -17 | -26 | 3.99 | -38.0 | -13.93 | 17.92 | -24.07 | X | |
| 0.84 | 46 | 53 | -86 | 5.98 | -37.1 | -13.55 | 19.53 | -23.55 | X | |
| 0.89 | 53 | -56 | 15 | 5.11 | -39.8 | -13.30 | 18.41 | -26.50 | X | |
| 1.00 | 38 | 54 | -81 | 6.40 | -35.7 | -12.79 | 19.19 | -22.91 | X | |
| 1.07 | 43 | -35 | 2 | 4.57 | -47.7 | -12.50 | 17.07 | -35.20 | X | |
| 1.34 | 35 | -34 | 7 | 4.91 | -41.3 | -11.52 | 16.43 | -29.78 | X | |
| 1.79 | 26 | -23 | 3 | 4.72 | -43.8 | -10.27 | 14.99 | -33.53 | X | |
| 2.69 | 17 | -12 | -1 | 4.37 | -46.8 | -8.50 | 12.87 | -38.30 | X | |
| 5.34 | 9 | -11 | 4 | 5.52 | -37.8 | -5.52 | 11.04 | -32.28 | X | |
| 5.43 | 8 | -1 | -5 | 4.03 | -36.7 | -5.45 | 9.48 | -31.25 | X | |
| 9.27 | 9 | -50 | 42 | 13.89 | -22.8 | -3.12 | 17.01 | -19.68 | X | |
| 13.14 | -1 | 49 | -47 | 15.50 | -21.6 | -1.61 | 17.11 | -19.99 | X | |

Table IV:

| Galileo 3F Ionosphere-free Combinations | | | | | | |
|---|---|---|---|---|---|---|
| λ [cm] | i | j | k | $A_\lambda$ | $\delta A_n$[dB] | NEW |
| 4.19 | 0 | 118 | -115 | -6.57 | 20.96 | |
| 0.70 | 77 | -177 | 115 | -14.35 | 22.50 | X |
| 0.60 | 77 | -59 | 0 | -15.02 | 19.50 | |
| 0.52 | 77 | 59 | -115 | -15.60 | 20.93 | X |
| 0.47 | 77 | 177 | -230 | -16.11 | 23.65 | X |
| 0.28 | 154 | 0 | -115 | -18.33 | 22.46 | |

Table V:

| Galileo 3F NL Combinations with Maximum Noise Reduction | | | | | | | |
|---|---|---|---|---|---|---|---|
| λ [cm] | i | j | k | $A_\lambda$ | $A_n$[dB] | $A_l$[dB] | NEW |
| 12.58 | 0 | 1 | 1 | -1.80 | -1.50 | 2.42 | X |
| 10.89 | 1 | 0 | 1 | -2.42 | -1.46 | 1.26 | X |
| 10.77 | 1 | 1 | 0 | -2.47 | -1.46 | 1.15 | X |
| 7.57 | 1 | 1 | 1 | -4.00 | -2.34 | 1.61 | X |

(continued)

| Galileo 3F NL Combinations with Maximum Noise Reduction | | | | | | | |
|---|---|---|---|---|---|---|---|
| λ [cm] | i | j | k | $A_\lambda$ | $A_n$[dB] | $A_l$[dB] | NEW |
| 5.83 | 1 | 1 | 2 | -5.13 | -2.22 | 1.84 | X |
| 4.72 | 1 | 2 | 2 | -6.06 | -2.31 | 1.93 | X |
| 3.98 | 1 | 2 | 3 | -6.80 | -2.17 | 2.03 | X |
| 3.29 | 2 | 2 | 3 | -7.62 | -2.33 | 1.74 | X |
| 2.91 | 2 | 3 | 3 | -8.16 | -2.37 | 1.81 | X |
| 2.10 | 3 | 4 | 4 | -9.57 | -2.38 | 1.76 | X |
| 1.64 | 4 | 5 | | 5-10.65 | -2.38 | 1.72 | X |
| 1.22 | 5 | 7 | | 7-11.93 | -2.38 | 1.78 | X |
| 0.92 | 7 | 9 | | 9-13.16 | -2.38 | 1.74 | X |

Table VI:

| Galileo First and Second order Ionospheric Properties of Selected Widelane Combinations | | | | | | | | | | |
|---|---|---|---|---|---|---|---|---|---|---|
| λ [m] | i | j | k | $A_n$ [dB] | $A_{l1}$ [dB] | $A_{l2}$ [dB] | $\delta A_n$ [dB] | $\delta A_{l1}$ [dB] | $\delta A_{l2}$ [dB] |
| 4.884 | 1 | -11 | 10 | 24.62 | -0.41 | 7.04 | 14.10 | -14.51 | -7.06 |
| 3.256 | 1 | -10 | 9 | 22.43 | -16.44 | 2.62 | 12.34 | -28.78 | -9.72 |
| 2.442 | 1 | -9 | 8 | 20.71 | -3.76 | -6.62 | 11.09 | -14.85 | -17.71 |
| 1.954 | 2 | -21 | 19 | 23.44 | -4.23 | 4.94 | 10.12 | -14.35 | -5.18 |
| 1.628 | 1 | -7 | 6 | 17.81 | -0.64 | 1.44 | 9.33 | -9.97 | -7.89 |
| 1.395 | 2 | -19 | 17 | 21.53 | -6.37 | -0.41 | 8.66 | -15.03 | -9.07 |
| 1.221 | 3 | -31 | 28 | 23.09 | -6.12 | 4.21 | 8.08 | -14.20 | -3.87 |
| 1.085 | 2 | -17 | 15 | 19.94 | -2.46 | -4.94 | 7.57 | -10.03 | -12.51 |
| 0.976 | 3 | -29 | 26 | 21.82 | -8.11 | 0.73 | 7.11 | -15.22 | -6.38 |

Table VIIa:

| Galileo Selected Linear Combinations With Doped Weighting Coefficients and λ = 0.2548m (δAλ = 1.27dB) | | | | | | |
|---|---|---|---|---|---|---|
| p | $\tau_{min}$ | i | j | k | $\delta A_l$ [dB] | $\delta A_n$ [dB] |
| 2 | 2.3305 | 4 | -1 | -2 | -17.78 | 6.37 |
| 2 | 2.3566 | 4 | 0 | -3 | -17.60 | 6.61 |
| 4 | 4.6871 | 8 | -1 | -5 | -31.33 | 9.48 |

Table VIIb:

| Galileo Additional 3F WL Linear Combinations with Doped Weighting Coefficient with Strong Reduction of the Ionospheric Error with p = 2 | | | | | | |
|---|---|---|---|---|---|---|
| λ [m] | i | j | k | $A_n$ [dB] | $A_l$ [dB] | $\tau_{min}$ |
| 0.2548 | 2 | 19 | -20 | 14.48 | -17.27 | 2.17 |
| 0.2548 | 6 | -20 | 15 | 14.26 | -17.05 | 2.51 |

(continued)

| λ [m] | i | j | k | An [dB] | $A_l$ [dB] | $\tau_{min}$ |
|---|---|---|---|---|---|---|
| Galileo Additional 3F WL Linear Combinations with Doped Weighting Coefficient with Strong Reduction of the Ionospheric Error with p = 2 | | | | | | |
| 0.2548 | 3 | 9 | -11 | 11.74 | -16.88 | 2.25 |
| 0.2548 | 5 | -10 | 6 | 11.35 | -16.67 | 2.43 |
| 0.2548 | 4 | -1 | -2 | 7.64 | -16.52 | 2.33 |
| 0.2548 | 4 | 0 | -3 | 7.88 | -16.33 | 2.36 |
| 0.2548 | 5 | -11 | 7 | 11.72 | -16.18 | 2.41 |
| 0.2548 | 3 | 10 | -12 | 12.12 | -16.01 | 2.28 |
| 0.2548 | 6 | -21 | 16 | 14.47 | -15.87 | 2.49 |
| 0.2548 | 2 | 20 | -21 | 14.70 | -15.71 | 2.20 |

Table VIIc:

| λ [m] | i | j | k | An [dB] | $A_l$ [dB] | $\tau_{min}$ |
|---|---|---|---|---|---|---|
| Galileo Additional 3F WL Linear Combinations with Doped Weighting Coefficients with Maximal Reduction of the Ionospheric Error with p = 4 | | | | | | |
| 0.2548 | 9 | -11 | 4 | 12.30 | -31.03 | 4.77 |
| 0.2548 | 8 | -1 | -5 | 10.74 | -30.06 | 4.69 |
| 0.2548 | 10 | -21 | 13 | 14.55 | -25.91 | 4.84 |
| 0.2548 | 7 | 9 | -14 | 12.84 | -25.59 | 4.61 |
| 0.2548 | 11 | -31 | 22 | 16.17 | -23.62 | 4.92 |
| 0.2548 | 6 | 19 | -23 | 14.94 | -23.43 | 4.53 |
| 0.2548 | 12 | -41 | 31 | 17.38 | -22.13 | 5.00 |
| 0.2548 | 5 | 29 | -32 | 16.46 | -22.00 | 4.45 |

Table VIII

| λ [m] | α | β | γ | An [dB] | $A_l$ [dB] |
|---|---|---|---|---|---|
| Galileo 3F WL Linear Combinations with arbitrary parameter α | | | | | |
| 1 | 5.225 | 4.026 | -3.924 | 8.86 | 7.05 |
| 2 | 10.510 | 8.053 | -7.848 | 11.87 | 10.06 |
| 5 | 26.275 | 20.132 | -19.621 | 15.85 | 14.04 |
| 10 | 52.550 | 40.265 | -39.242 | 18.86 | 17.05 |
| 15 | 78.825 | 60.398 | -58.863 | 20.62 | 18.81 |
| 20 | 105.100 | 80.531 | -78.484 | 21.87 | 20.06 |
| 25 | 131.375 | 100.664 | -98.105 | 22.84 | 21.03 |
| 30 | 157.651 | 120.797 | -117.726 | 23.63 | 21.82 |
| 50 | 262.751 | 201.329 | -196.210 | 25.85 | 24.04 |

Table IX:

| 3F GPS widelane combinations: | | | | | | |
|---|---|---|---|---|---|---|
| λ [m] | i | j | k | $A_\lambda$ [dB] | $\delta A_I$ [dB] | $\delta A_N$ [dB] |
| 29.305 | 4 | -8 | 3 | 21.87 | 3.52 | 8.88 |
| 14.652 | 3 | 0 | -4 | 18.86 | 3.71 | 6.26 |
| 9.768 | -3 | 1 | 3 | 17.10 | 3.61 | 5.82 |
| 7.326 | 1 | -7 | 6 | 15.85 | -12.88 | 8.53 |
| 5.861 | 0 | 1 | -1 | 14.88 | -12.53 | 0.33 |
| 4.884 | 4 | -7 | 2 | 14.09 | 3.62 | 8.40 |
| 4.186 | 3 | 1 | -5 | 13.42 | 3.82 | 6.85 |
| 3.663 | -3 | 2 | 2 | 12.84 | 3.51 | 5.67 |
| 3.256 | 1 | -6 | 5 | 12.33 | -23.61 | 7.82 |
| 2.930 | -5 | -5 | 12 | 11.87 | 6.67 | 10.40 |
| 2.664 | 4 | -6 | 1 | 11.46 | 3.72 | 7.91 |
| 2.442 | 3 | 2 | -6 | 11.08 | 3.92 | 7.49 |
| 2.254 | -3 | 3 | 1 | 10.73 | 3.40 | 5.88 |
| 2.093 | 1 | -5 | 4 | 10.41 | -12.20 | 6.99 |
| 1.953 | -5 | -4 | 11 | 10.11 | 6.62 | 10.04 |
| 1.831 | 4 | -5 | 0 | 9.83 | 3.83 | 7.46 |
| 1.723 | -2 | -4 | 7 | 9.57 | 3.49 | 8.06 |

Table X:

| 3F GPS reduced ionosphere WL combinations | | | | | | |
|---|---|---|---|---|---|---|
| λ [m] | i | j | k | Aλ [dB] | $\delta A_I$ [dB] | δAN [dB] |
| 29.305 | -1 | 8 | -7 | 21.87 | -9.69 | 9.13 |
| 14.652 | 3 | -23 | 20 | 18.86 | -5.75 | 13.71 |
| 9.768 | 2 | -15 | 13 | 17.10 | -7.99 | 11.85 |
| 7.326 | 1 | -7 | 6 | 15.85 | -12.88 | 8.53 |
| 5.861 | 0 | 1 | -1 | 14.88 | -12.53 | 0.33 |
| 4.884 | -1 | 9 | -8 | 14.09 | -7.87 | 9.66 |
| 4.186 | 3 | -22 | 19 | 13.42 | -6.77 | 13.51 |
| 3.663 | -3 | 25 | -22 | 12.84 | -4.23 | 14.09 |
| 3.256 | 1 | -6 | 5 | 12.33 | -23.61 | 7.82 |
| 2.930 | 5 | -37 | 32 | 11.87 | -4.33 | 15.77 |
| 2.664 | -1 | 10 | -9 | 11.46 | -6.59 | 10.14 |
| 2.254 | 2 | -13 | 11 | 10.73 | -13.26 | 11.20 |
| 2.093 | 1 | -5 | 4 | 10.41 | -12.20 | 6.99 |
| 1.953 | 5 | -36 | 31 | 10.11 | -5.04 | 15.64 |
| 1.831 | -1 | 11 | -10 | 9.83 | -5.61 | 10.57 |

(continued)

| 3F GPS reduced ionosphere WL combinations | | | | | | |
|---|---|---|---|---|---|---|
| λ [m] | i | j | k | Aλ [dB] | δAI [dB] | δAN [dB] |
| 1.723 | 3 | -20 | 17 | 9.57 | -10.06 | 13.07 |
| 1.542 | 1 | -4 | 3 | 9.08 | -9.35 | 5.98 |
| 1.395 | 4 | -27 | 23 | 8.65 | -8.23 | 14.38 |
| 1.332 | 3 | -19 | 16 | 8.45 | -13.69 | 12.84 |

Table XI

| 3F GPS reduced ionosphere NL combinations: | | | | | | |
|---|---|---|---|---|---|---|
| λ [cm] | i | j | k | Aλ [dB] | δAI [dB] | δAN [dB] |
| 15.67 | 0 | 24 | -23 | -0.84 | IF | 14.00 |
| 12.97 | -1 | 30 | -28 | -1.66 | -23.61 | 14.96 |
| 12.01 | 1 | 18 | -18 | -1.99 | -23.62 | 12.88 |
| 11.58 | 2 | 12 | -13 | -2.15 | -20.60 | 11.34 |
| 5.90 | 3 | 30 | -31 | -5.08 | -18.84 | 15.18 |
| 5.20 | 11 | -19 | 10 | -5.63 | -20.98 | 12.98 |
| 5.11 | 12 | -25 | 15 | -5.71 | -24.41 | 14.06 |
| 3.63 | 12 | -1 | -8 | -7.19 | -24.41 | 11.27 |
| 3.59 | 13 | -7 | -3 | -7.24 | -31.40 | 11.54 |
| 2.79 | 13 | 17 | -26 | -8.33 | -31.40 | 14.28 |
| 1.80 | 25 | -8 | -11 | -10.24 | -25.36 | 14.33 |
| 1.57 | 26 | 10 | -29 | -10.83 | -28.39 | 15.40 |

**Claims**

1. A method for processing a set of navigation signals (3) of a global navigation satellite system (1) with at least three carrier signals (4) in which the processing of the navigation signals is based on a linear combination of phase measurements of the carrier signals (9) to a combined phase signal
   **characterized in that**
   the sum of the weighting coefficients of the linear combination deviates from zero and that a phase ambiguity of the combined phase signal is an integer multiple of a combined wavelength associated with the combined phase signal, and that the combined ionospheric error or the combined noise associated with the combined phase signal assumes a minimized value for a specific combined wavelength.

2. The method according to Claim 1
   **characterized in that**
   the weighting coefficients are linear independent.

3. The method according to Claim 1 or 2
   **characterized in that**
   the weighting coefficients are associated with single periods of the combined wavelength and contained in an interval extending over zero.

4. The method according to any one of Claim 1 through 3
   **characterized in that**

the combined signal is processed according to the double difference method.

**5.** The method according to any one of Claim 1 through 4
**characterized in that**
the combined signal is processed according to the cascade integer resolution method for resolving the phase ambiguity using linear combinations with associate minimized ionospheric error or combined noise in at least the first and second iteration step.

**6.** The method according to any one of Claim 1 through 5
**characterized in that**
the N phase measurements $\varphi_i$ of the carrier signals with wavelength $\lambda_i$ are combined using the weighting coefficients $\alpha_i$ according to:

$$\phi_{LC} = \sum_{i=1}^{N \geq 3} \alpha_i \phi_i \quad \text{with} \quad \alpha_i = \frac{n_i \lambda}{\lambda_i} \ , \quad \sum_{i=1}^{N \geq 3} \alpha_i = \tau \quad \text{and} \quad \frac{\tau}{\lambda} = \sum_{i=1}^{N \geq 3} \frac{n_i}{\lambda_i}$$

$n_i$ being integer numbers and $\tau \geq 1$.

**7.** The method according to Claim 6
**characterized in that**
the sum of the weighting coefficients $\tau$ equals 1.

**8.** The method according to any one of Claim 1 to 7
**characterized in that**
the variation factor associated with the variation of the combined ionospheric error with respect to the single ionospheric error is smaller than the variation factor associated with the variation of the combined noise with respect to the single noise.

**9.** The method according to any one of Claim 1 to 8
**characterized in that**
the combined ionospheric error associated with the combined signal is minimized.

**10.** The method according to any one of Claim 1 through 9
**characterized in that**
the carrier signals (9) are combined to form a combined signal with a combined wavelength in the widelane range.

**11.** The method according to Claim 10
**characterized in that**
the amplification of the combined noise associated with the combined signal is minimized.

**12.** The method according to any one of Claim 1 through 9
**characterized in that**
the carrier signals are combined to form a combined signal with a combined wavelength in the narrowlane range.

**13.** The method according to Claim 12
**characterized in that**
the combined noise associated with the combined signal is minimized.

**14.** The method according to Claim 6
**characterized in that**
the sum of the weighting coefficients $\tau$ is greater than 1.

**15.** The method according to Claim 6
**characterized in that**
N = 3 and the carrier signals (4) have the Galileo wavelengths $\lambda_1$ = 19,0 cm, $\lambda_2$ = 24,8 cm and $\lambda_3$ = 25,5 cm.

**16.** The method according to Claims 7, 11 and 15
**characterized in that**
the integer numbers $n_i$ are chosen from the triples ( -3, 1, 3), ( 3, 0, -4), ( -3, 2, 2), ( 3, 1, -5), ( -9, 4, 8), ( -3, 3, 1), ( 3, 2, -6), ( 1,-10, 9), ( -3, 4, 0), ( 3, 3, -7), ( 1, -9, 8), ( -3, 5, -1), ( 3, 4, -8), ( 1, -8, 7), ( -3, 6, -2), ( 4, -8, 3).

**17.** The method according to Claims 7, 9, 10 and 15
**characterized in that**
the integer numbers $n_i$ are chosen from the triples ( 1,-11, 10), ( 1,-10, 9), ( 1, -9, 8), ( 2,-21, 19), ( 1, -7, 6), ( 2,-19, 17), ( 3,-31, 28), ( 2,-17, 15), ( 3,-29, 26), ( 4,-41, 37), ( 5,-53, 48), ( 4,-39, 35), ( 5,-51, 46), ( 4,-37, 33), ( 5,-49, 44), ( 5,-48, 43), ( 5,-47, 42), ( 5,-46, 41),

**18.** The method according to Claim 7, 9, 10 and 15
**characterized in that**
the integer numbers $n_i$ are chosen from the triples ( -1, 15,-14), ( 2,-23, 21), ( 3,-35, 32), ( 1, -8, 7), ( -1, 19,-18), ( 3,-32, 29), ( 1, -5, 4), ( 4,-43, 39), ( 1, -3, 2), ( 3,-28, 25), ( 5,-52, 47), ( 3,-25, 22), ( 2,-11, 9), ( 3,-23, 20), ( 4,-35, 31), ( 1, 5, -6), ( 4,-33, 29).

**19.** The method according to Claims 7, 9, 12 and 15
**characterized in that**
the integer numbers $n_i$ are chosen from the triples ( 54, 52,-91), ( 57,-17,-26), ( 46, 53,-86), ( 53,-56, 15), ( 38, 54,-81), ( 43,-35, 2), ( 35,-34, 7), ( 26,-23, 3), ( 17,-12, -1), ( 9,-11, 4), ( 8, -1, -5), ( 9,-50, 42), ( -1, 49, 47), (77,-177,115), ( 77,59,-115), (77,177,-230).

**20.** The method according to Claims 7, 9, 13 and 15
**characterized in that**
the integer numbers $n_i$ are chosen from the triples (0, 1, 1) , (1, 0, 1) , (1, 1, 0), (1, 1, 1), (1, 1, 2), (1, 2, 2), (1,2,3), (2,2,3), (2,3,3), (3,4,4), (4,5,5), (5,7,7) (7, 9, 9) .

**21.** The method according to Claims 14 and 15
**characterized in that**
the integer numbers $n_i$ are chosen from the triples ( 4, -1, -2), ( 4, 0, -3), ( 8, -1, -5), ( 2, 19,-20), ( 6,-20, 15), ( 3, 9,-11), ( 5,-10, 6), ( 4, -1, -2), ( 4, 0, -3), ( 5,-11, 7), ( 3, 10,-12), ( 6,-21, 16), ( 2, 20,-21), ( 9,-11, 4), ( 8, -1, -5), ( 10,-21, 13), ( 7, 9,-14), ( 11,-31, 22), ( 6, 19,-23), ( 12,-41, 31), ( 5, 29,-32).

**22.** The method according to Claim 6
**characterized in that**
that N = 3 and the carrier signals (4) have the GPS wavelengths $\lambda_1$ = 19,0 cm, $\lambda_2$ = 24,4 cm and $\lambda_3$ = 25,5 cm.

**23.** The method according to Claims 7, 11 and 22
**characterized in that**
the integer numbers $n_i$ are chosen from the triples ( 4, -8, 3), ( 3, 0, -4), (-3, 1, 3), ( 1, -7, 6), ( 0, 1, -1), ( 4, -7, 2), ( 3, 1, -5), (-3, 2, 2), ( 1, -6, 5), ( -5, -5, 12), ( 4, -6, 1), ( 3, 2, -6), ( -3, 3, 1), ( 1, -5, 4), ( -5, -4, 11), ( 4, -5, 0), ( -2, -4, 7).

**24.** The method according to Claims 7, 9, 10 and 22
**characterized in that**
the integer numbers $n_i$ are chosen from the triples ( -1, 8, -7), ( 3,-23, 20), ( 2,-15, 13), ( 1, -7, 6), ( 0, 1, -1), ( -1, 9, -8), ( 3,-22, 19), ( -3, 25,-22), ( 1, -6, 5), ( 5,-37, 3), ( -1, 10, -9), ( 2,-13, 11), ( 1, -5, 4), ( 5,-36, 31), ( -1, 11, -10), ( 3,-20, 17), ( 1, -4, 3), ( 4,-27, 23), ( 3,-19, 16).

**25.** The method according to Claims 7, 9, 12 and 22
**characterized in that**
the integer numbers $n_i$ are chosen from the triples ( 0, 24,-23), ( -1, 30,-28), ( 1, 18,-18), ( 2, 12,-13), ( 3, 30,-31), ( 11,-19, 10), ( 12,-25, 15), ( 12, -1, -8), ( 13, -7, -3), ( 13, 17,-26), ( 25, -8,-11), ( 26, 10,-29).

**26.** A navigation device for a global navigation satellite system
**characterized in that**
the device is arranged for performing a method according to any one of the claims 1 through 25.

FIG 1

FIG 2

## FIG 3

## FIG 4

## FIG 5

## FIG 6

EP 1 972 958 A1

## FIG 7

## FIG 8

## FIG 9

## FIG 10

## FIG 11

```
          ┌──────────────────────────────────┐
          │              Start               │
          └──────────────────────────────────┘
                           │
                           ▼
          ┌──────────────────────────────────┐
          │   Signal Acquisition and Tracking│ ─── 17
          └──────────────────────────────────┘
                           │
                           ▼
          ┌──────────────────────────────────────────┐
          │ Sampling of Code and Carrier Phase        │ ─── 18
          │            Measurement                    │
          └──────────────────────────────────────────┘
                           │
                           ▼
          ┌──────────────────────────────────┐
          │        Linear Combination        │ ─── 19
          └──────────────────────────────────┘
                           │
                           ▼
          ┌──────────────────────────────────────────┐
          │ Solving for Base Line and Phase Ambiguity │ ─── 20
          └──────────────────────────────────────────┘
                           │
                           ▼
          ┌──────────────────────────────────┐
          │    Search for Integer Ambiguities│ ─── 21
          └──────────────────────────────────┘
                           │
                           ▼
    ┌────▶ ┌──────────────────────────────────┐
    │     │        Linear Combination        │ ─── 22
    │     └──────────────────────────────────┘
    │                      │
    │                      ▼
    │     ┌──────────────────────────────────────────┐
    │     │ Solving for Base Line and Phase Ambiguity │ ─── 23
    │     └──────────────────────────────────────────┘
    │                      │
    │                      ▼
    │     ┌──────────────────────────────────┐
    │     │    Search for Integer Ambiguities│ ─── 24
    │     └──────────────────────────────────┘
    │                      │
    │                      ▼
    │     ┌──────────────────────────────────┐
    └──── │     Computation of baseline      │ ─── 25
          └──────────────────────────────────┘
                           │
                           ▼
          ┌──────────────────────────────────┐
          │               End                │
          └──────────────────────────────────┘
```

European Patent
Office

**EUROPEAN SEARCH REPORT**

Application Number

EP 07 11 2008

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2006/108227 A (FENG YANMING [AU]; MOODY MILES P [AU]) 19 October 2006 (2006-10-19) * figures 3-5 * * tables 4,5 * * page 12, line 10 - page 19, line 8 * * page 20, line 19 - line 21 * * page 27, line 26 - page 32, line 24 * ----- | 1-26 | INV. G01S5/14 |
| X | SHAOWEI HAN ET AL: "The Impact of Two Additional Civilian GPS Frequencies on Ambiguity Resolution Strategies" PROCEEDINGS OF THE ION NATIONAL TECHNICAL MEETING, THE INSTITUTE OF NAVIGATION, US, 28 June 1999 (1999-06-28), pages 315-321, XP002314346 * pages 316-318, section "Linear Combination of Carrier Phase Measurements" * ----- | 1-26 | |
| X | US 2005/080560 A1 (HATCH RONALD R [US]) 14 April 2005 (2005-04-14) * paragraph [0005] * * paragraph [0020] - paragraph [0023] * * paragraph [0026] * * paragraph [0029] - paragraph [0031] * ----- | 1-26 | TECHNICAL FIELDS SEARCHED (IPC) G01S |
| A | VOLLATH U ET AL: "ANALYSIS OF THREE-CARRIER AMBIGUITY RESOLUTION TECHNIQUE FOR PRECISE RELATIVE POSITIONING IN GNSS-2" NAVIGATION, INSTITUTE OF NAVIGATION, WASHINGTON, DC, US, vol. 46, no. 1, 21 March 1999 (1999-03-21), pages 13-23, XP008024320 ISSN: 0028-1522 * the whole document * ----- | 1-26 | |

The present search report has been drawn up for all claims

| Place of search | Date of completion of the search | Examiner |
|---|---|---|
| Munich | 30 November 2007 | Hekmat, Taymoor |

EPO FORM 1503 03.82 (P04C01)

**ANNEX TO THE EUROPEAN SEARCH REPORT
ON EUROPEAN PATENT APPLICATION NO.**

EP 07 11 2008

This annex lists the patent family members relating to the patent documents cited in the above-mentioned European search report.
The members are as contained in the European Patent Office EDP file on
The European Patent Office is in no way liable for these particulars which are merely given for the purpose of information.

30-11-2007

| Patent document cited in search report | | Publication date | Patent family member(s) | | Publication date |
|---|---|---|---|---|---|
| WO 2006108227 | A | 19-10-2006 | NONE | | |
| US 2005080560 | A1 | 14-04-2005 | AU | 2004281011 A1 | 21-04-2005 |
| | | | BR | PI0415169 A | 28-11-2006 |
| | | | CA | 2541173 A1 | 21-04-2005 |
| | | | CN | 1864078 A | 15-11-2006 |
| | | | EP | 1678516 A1 | 12-07-2006 |
| | | | JP | 2007508553 T | 05-04-2007 |
| | | | WO | 2005036202 A1 | 21-04-2005 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **VOLLATH, U.** Three or Four Frequencies-How many are enough?. *Proc. of the Institute of Navigation,* 2000
- **COCARD, M. ; GEIGER, A.** Systematic search for all possible widelanes. *Proc. of 6th Intern. Geodetic Symposium on Satellite Positioning,* 1992
- **FORSSELL, B. ; MARTIN-NEIRA, M. ; HARRIS, R.** Carrier Phase Ambiguity Resolution in GNSS-2. *Proceedings of the Institute of Navigation (ION GPS,* 1997
- **COLLINS, P.** An overview of GPS inter-frequency carrier phase combinations. *UNB/GSD,* 1999
- **JUNG, J.** High Integrity Carrier Phase Navigation Using Multiple Civil GPS Signals. *Ph.D. Thesis,* 2000
- **TEUNISSEN, P.** Least-squares estimation of the integer ambiguities, Invited lecture. *Theory and Methodology, IAG General Meeting, Beijing, China,* 1993, vol. IV
- **DE JONGE, D. ; TIBERIUS, C.** The LAMBDA method for integer ambiguity estimation: implementation aspects. *LGR series, Delft University of Technology,* 1996, 1-49
- **HENKEL, P. ; GÜNTHER, C.** Integrity Analysis of Cascade Integer Resolution with Decorrelation Transformations. *Proceedings of the Institute of Navigation, National Technical Meeting,* 2007